Europäisches Patentamt

European Patent Office

Office européen des brevets

(19)

(11) Veröffentlichungsnummer : **0 208 126**
**B1**

(12) # EUROPÄISCHE PATENTSCHRIFT

(45) Veröffentlichungstag der Patentschrift :
07.03.90

(51) Int. Cl.⁵ : **F 16 K   1/44**

(21) Anmeldenummer : **86107374.0**

(22) Anmeldetag : **30.05.86**

(54) **Verfahren zur Verwirklichung eines leckagefrei schaltenden und sitzreinigungsfähigen Doppelsitzventils und Vorrichtung zur Durchführung des Verfahrens.**

(30) Priorität : **11.06.85 EP 85107177**

(43) Veröffentlichungstag der Anmeldung :
**14.01.87 Patentblatt 87/03**

(45) Bekanntmachung des Hinweises auf die Patenterteilung : **07.03.90 Patentblatt 90/10**

(84) Benannte Vertragsstaaten :
**AT BE CH DE FR GB IT LI LU NL SE**

(56) Entgegenhaltungen :
**EP–A– 0 044 517**
**EP–A– 0 174 384**
**DE–A– 2 623 039**
**DE–A– 3 005 329**
**DE–A– 3 133 273**
**FR–A– 2 379 005**

(73) Patentinhaber : **OTTO TUCHENHAGEN GmbH & Co. KG**
**Berliner Strasse 10 Postfach 1140**
**D-2059 Büchen (DE)**

(72) Erfinder : **Mieth, Hans Otto, Dipl.-Ing.**
**Sandkrug 3**
**D-2058 Schnakenbek/Elbe (DE)**

(74) Vertreter : **Glaeser, Joachim, Dipl.-Ing. et al**
**Patentanwälte DIEHL GLAESER HILTL & PARTNER**
**Königstrasse 28**
**D-8000 Hamburg 50 (DE)**

## Beschreibung

Die Erfindung betrifft ein Verfahren zur Verwirklichung eines leckagefrei schaltenden und sitzreinigungsfähigen Doppelsitzventils nach dem Oberbegriff des Hauptanspruchs.

Die gattungsprägenden Merkmale nach dem Oberbegriff des Hauptanspruchs der vorliegenden Erfindung sind aus dem europäischen Patent 00 44 517 bekannt. Das dort unter Schutz gestellte Verfahren löst die Aufgabe, die gleichzeitige Reinigung beider Sitzflächen eines wenigstens einseitig produktbeaufschlagten Doppelsitzventils zu ermöglichen.

In bestimmten Anwendungsfällen, insbesondere beim Einsatz von Doppelsitzventilen in der Nahrungsmittelindustrie, ist es von Vorteil, wenn der Schaltvorgang derartiger Ventile leckagefrei durchführbar ist. Unter Schaltleckage wird diejenige Fluidmenge verstanden, die gegebenenfalls bei einem Schaltvorgang aus einem Ventilgehäuseteil über die jeweils freigelegte Sitzfläche in den Leckage-Hohlraum gelangt. Falls ein Doppelsitzventil aufgrund seines prinzipiellen Aufbaus nicht leckagefrei schalten kann, tritt diese Schaltleckage sowohl bei der Öffnungs- als auch bei der Schließbewegung des Ventils auf.

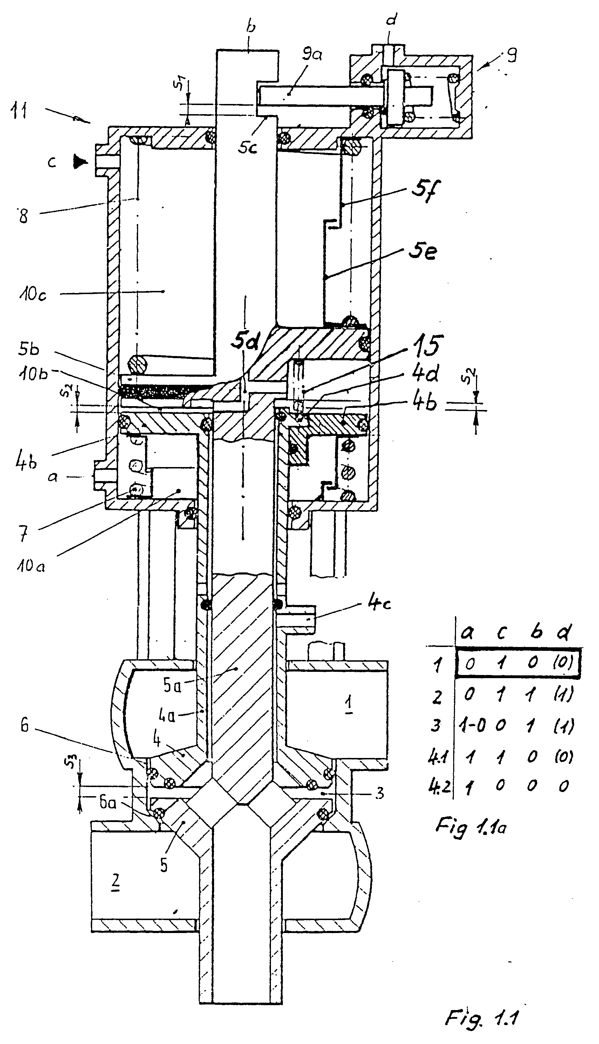

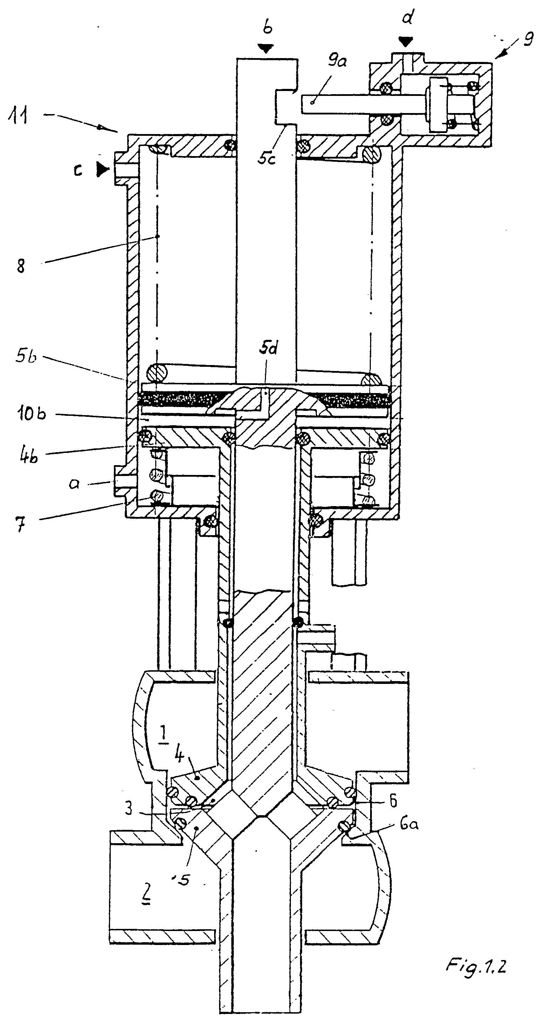

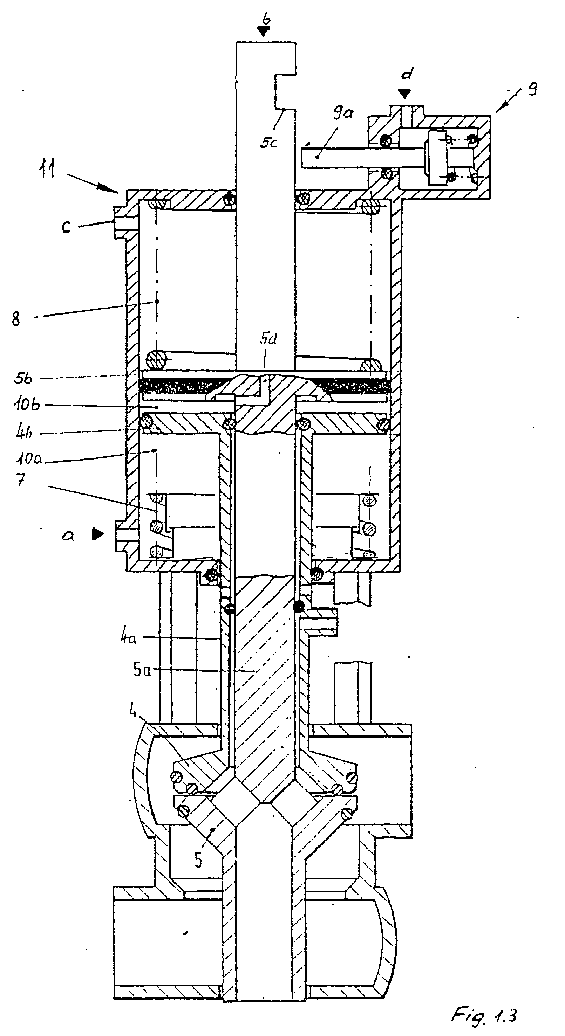

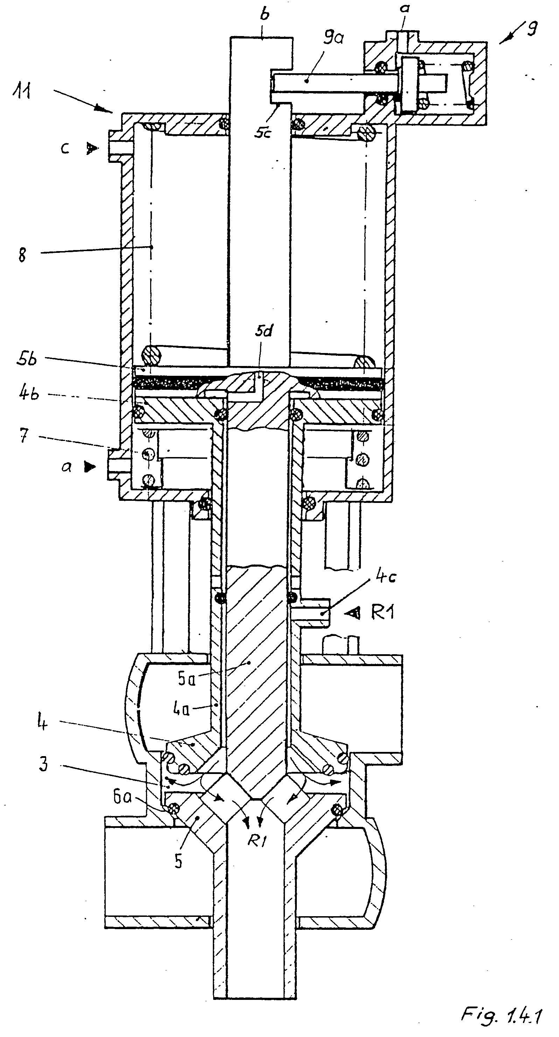

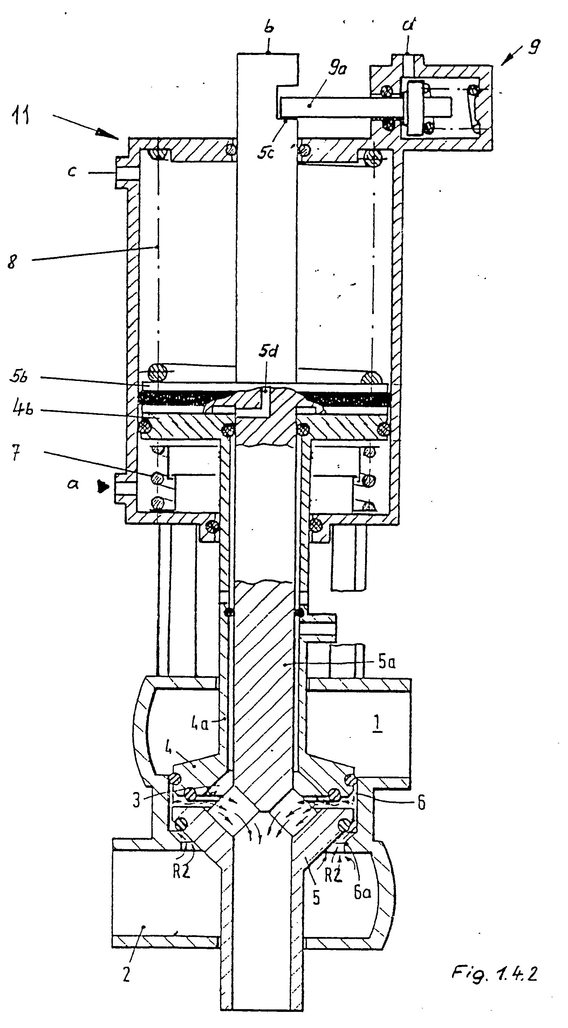

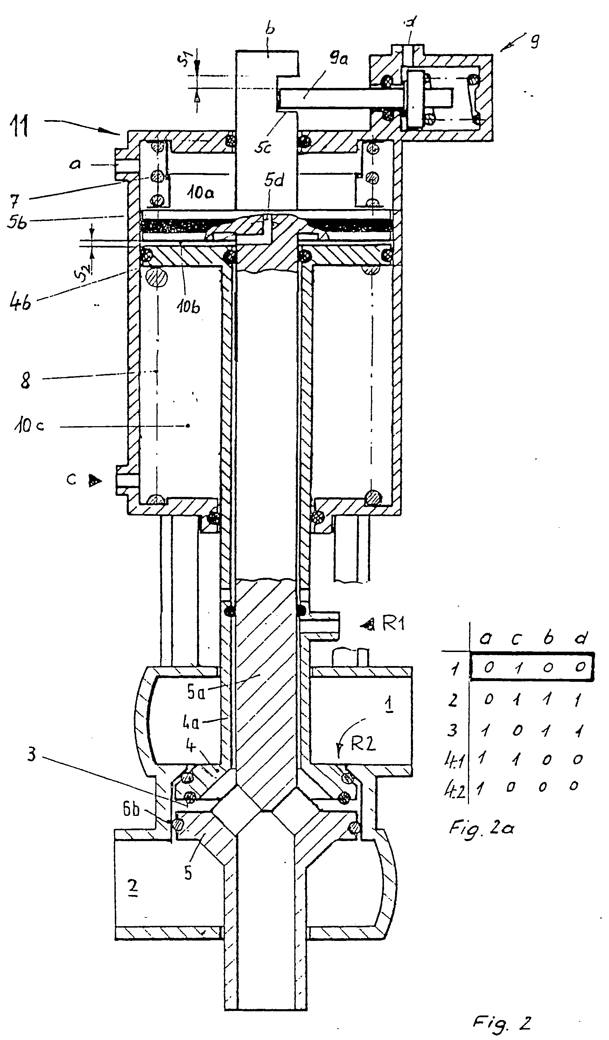

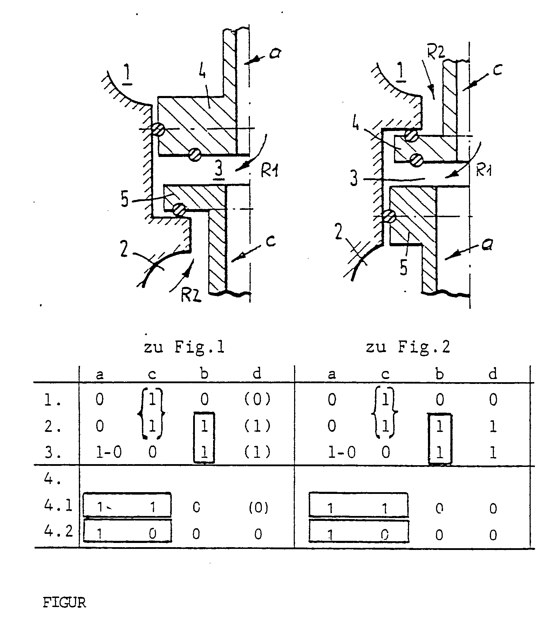

Von den aus dem europäischen Patent 00 44 517 gemäß den Figuren 1 bis 5a bekannten Grundsatzlösungen für Doppelsitzventile stellen lediglich die Lösungen gemäß den Figuren 1 bis 3a leckagefrei schaltende Ventile dar. Darüber hinaus ist es mit keiner der fünf Grundsatzlösungen möglich, die alleinige Reinigung der Sitzfläche des ggf. produktbeaufschlagten, schieberartig ausgebildeten Schließgliedes vom Leckage-Hohlraum aus über Reinigungsmittel, das von außerhalb des Doppelsitzventils zugeführt wird, durchzuführen. Ein derartiges Reinigungsverfahren ist in der Praxis aber immer dann notwendig und angezeigt, wenn im anderen Ventilgehäuseteil, das von dem als Sitzteller ausgebildeten Schließglied verschlossen wird, entweder ebenfalls Produkt ansteht oder aber kein Reinigungsmittel zur Verfügung gestellt werden kann.

Aus dem europäischen Patent 00 39 319 ist ein Doppelsitzventil bekannt, das zwei Ventilschließglieder besitzt, von denen das eine als Schieberkolben mit radialen Dichtungsmitteln ausgebildet ist, der betätigbar ist zum Verschieben zwischen einer Offenstellung, in der sein Endabschnitt vom anderen Schließglied umschlossen ist und einer dichtend in einem zylindrischen Ventilsitz aufgenommenen Schließstellung. Das andere Schließglied weist an seinem dem Schieberkolben zugewandten Ende eine Ausnehmung mit einer im wesentlichen zylindrischen Umfangswand auf, die dimensioniert ist, um während der Öffnungsbewegung den Endabschnitt des Schieberkolbens dichtend aufzunehmen, bevor das zweite Schließglied öffnet. Dieses bekannte Doppelsitzventil schaltet zwar leckagefrei ; es ist jedoch nicht sitzreinigungsfähig, das heißt die Sitzflächen und die mit diesen korrespondierenden Dichtungsmittel können weder gemeinsam noch einzeln und unabhängig voneinander gereinigt werden.

In der nicht vorveröffentlichten europäischen Patentanmeldung 84 110 849.1 (EP-A-174 384) wird ein Doppelsitzventil, das in seinem grundsätzlichen Aufbau und in wesentlichen konstruktiven Merkmalen dem Ventil gemäß dem europäischen Patent 00 39 319 entspricht, dahingehend ausgebildet, daß nunmehr dieses Ventil sitzreinigungsfähig ist. Dies bedeutet im vorliegenden Fall, daß die Sitzflächen und die mit diesen korrespondierenden Dichtungsmittel einzeln und unabhängig voneinander gereinigt werden können. Erreicht wird dies dadurch, daß das Ventilschließglied, das als Schieberkolben mit radialen Dichtungsmitteln ausgebildet ist, in eine Zwischenstellung zwischen seiner Schließ- und Offenstellung überführt wird, in der die radiale Dichtung in einer umlaufenden Ringnut, die in der jeweils zugeordneten Sitzfläche ausgebildet ist, für den Zutritt des Reinigungsmittels freigelegt ist. Durch diese Ausbildung ist allerdings leckagefreies Schalten nicht mehr möglich, da beim Durchfahren des unabhängig betätigbaren Schieberkolbens durch die vorstehend beschriebene Zwischenstellung in jedem Falle eine kurzzeitige Trennung zwischen den radialen Dichtungsmitteln und der zugeordneten Sitzfläche stattfindet. Darüber hinaus ist bei diesem bekannten Doppelsitzventil die Reinigung der einen Sitzfläche nur möglich, wenn auf der anderen Sitzfläche das zugeordnete Ventilschließglied über eine jeweils aufzuprägende Zusatzkraft niedergehalten wird. Damit diese Zusatzkraft aufgebracht, die Teilhubbewegungen der Ventilschließglieder erzeugt und deren Vollhub realisiert werden können, sind fünf getrennt voneinander ansteuerbare Gasräume mit vier Kolben erforderlich.

Neben diesem an sich bereits erheblichen Aufwand sind außerdem der Hauptantrieb des Doppelsitzventils für den Vollhub und die Nebenantriebe für die Teilhubbewegungen voneinander getrennt und beiderseits des Ventilgehäuses angeordnet.

Ausgehend vom vorgenannten Stand der Technik ist es Aufgabe der vorliegenden Erfindung, bei einem Doppelsitzventil der einleitend gekennzeichneten Gattung leckagefreies Schalten und die Möglichkeit der gleichzeitigen Reinigung der Sitzflächen beider Schließglieder und/oder der alleinigen Reinigungsfähigkeit der Sitzfläche des produktbeaufschlagten, schieberartig ausgebildeten Schließgliedes zu verwirklichen.

Diese Aufgabe wird nach dem Kennzeichen des Hauptanspruchs gelöst.

Durch das erfindungsgemäße Verfahren wird erstmals sichergestellt, daß Doppelsitzventile, bei denen die « Abholbewegung » des Schiebers in zur Öffnungsbewegung entgegengesetzter Richtung verläuft, prinzipiell leckagefrei schalten. Darüber hinaus wird, gemäß weiterer Ausgestaltungen des erfindungsgemäßen Verfahrens, erreicht, daß eine besonders sichere und wirkungsvolle Kopplung der beiden Schließglieder realisiert wird, da diese Kopplung nicht mehr allein aus der Öffnungs-bzw. Schließbewegung des Doppelsitzventils resultiert, sondern gezielt gesteuert und kräftemäßig beliebig intensiv herbeigeführt wird.

Eine vorteilhafte Ausgestaltung des erfindungsgemäßen Verfahrens ermöglicht nunmehr durch Heranführen des Reinigungsmittels von außerhalb des Doppelsitzventils über den Leckage-Hohlraum die alleinige Reinigung der Sitzfläche des ggf. produktbeaufschlagten, schieberartig ausgebildeten Schließgliedes, da dieses erfindungsgemäß aus seiner Ruhelage in Richtung des ggf. produktführenden Ventilgehäuseteils allein verschiebbar ist.

Eine andere Weiterbildung des erfindungsgemäßen Verfahrens sieht vor, daß das von außerhalb des Doppelsitzventils bereitgestellte Reinigungsmittel bei Überschreiten eines wahlweise einstellbaren Druckes die zur Sitzreinigung des schieberartig ausgebildeten Schließgliedes notwendige Schaltfolge, die nach einem ventilinternen Schaltalgorithmus abläuft, ursächlich in Gang setzt. Dadurch wird erreicht, daß der zur Sitzreinigung notwendige externe Ansteuerungsaufwand für das Doppelsitzventil auf die im Bedarfsfall notwendige Bereitstellung des Reinigungsmittels mit dem jeweils erforderlichen Druck reduziert wird.

Eine andere vorteilhafte Ausgestaltung des erfindungsgemäßen Verfahrens reduziert den zum Öffnen und Schließen des Doppelsitzventils notwendigen externen Ansteuerungsaufwand dadurch, daß die erfindungsgemäße Schaltfolge nach einem ventilinternen Schaltalgorithmus, der von außerhalb des Doppelsitzventils in bekannter Weise eingeleitet wird, abläuft. Da die Blockiervorrichtung und der Raum zwischen den Antriebskolben stets in gleicher Weise, allenfalls phasenverschoben, angesteuert werden, sind bei einem Schaltvorgang des Doppelsitzventils (Öffnungsbewegung in die Offenstellung, Schließbewegung in die Schließstellung) maximal drei Steuersignale gemäß der erfindungsgemäßen Schaltfolge erforderlich. Durch die vorgenannte Maßnahme ist lediglich ein externes Steuersignal (Ventil auf, Ventil zu) notwendig ; die beiden anderen werden intern generiert.

Gemäß einer weiteren Ausgestaltung des erfindungsgemäßen Verfahrens kann der Sitzreinigungsvorgang insbesondere im ggf. produktbeaufschlagten Sitzbereich durch mehrmals sich wiederholende Teilhubbewegungen intensiviert werden.

Um insbesondere das als Sitzteller ausgebildete Schließglied bei unplanmäßig auftretenden Druckerhöhungen oder Druckschlägen gegen Aufdrücken aus seiner Schließlage zu sichern, sieht eine weitere Ausgestaltung des erfindungsgemäßen Verfahrens vor, den vorgenannten Sitzteller wahlweise mit einer Zusatzkraft auf seine Sitzfläche zu drücken.

Eine weitere vorteilhafte Weiterbildung des erfindungsgemäßen Verfahrens sieht vor, wenigstens ein Schließglied im Bereich des ihm zugeordneten Ventilgehäuseteils derart zu formen, daß die vom Fluid in den Leitungen auf das Schließglied ausgeübten Druckkräfte weitgehend ausgeglichen sind. Eine derartige Maßnahme macht die Aufbringung einer Zusatzkraft oder ein Arretieren des Schließgliedes überflüssig.

Das im europäischen Patent 00 44 517 unter Schutz gestellte Verfahren löst die dort erfindungsgemäß herausgestellte Aufgabe, nämlich die gleichzeitige Reinigung beider Sitzflächen eines wenigstens einseitig produktbeaufschlagten Doppelsitzventils zu ermöglichen, anhand von fünf in den Figuren 1 bis 5a dargestellten Grundsatzlösungen, von denen die Grundsatzlösungen gemäß den Figuren 4 bis 5a unter den Oberbegriff des Anspruches 1 der vorliegenden Erfindung fallen. Gegenständlich ist die in dem vorgenannten Patent erfindungsgemäß herausgestellte Aufgabe nur für die Grundsatzlösung gemäß Figur 4 gelöst.

Die vorliegende Erfindung verfolgt nicht nur das Ziel, eine Vorrichtung zur Durchführung des erfindungsgemäßen Verfahrens auszubilden, sondern darüber hinaus auch die in der EP 00 44 517 unter Schutz gestellte Grundsatzlösung, gemäß Figuren 5, 5a für die die gegenständliche Realisierung der gleichzeitigen Reinigung der Sitzflächen beider Schließglieder bislang noch nicht gelöst ist, im Sinne der letztgenannten Aufgabe gegenständlich auszugestalten.

Die der vorliegenden Erfindung zugrunde liegende Aufgabe, die somit auch die aus der EP 00 44 517 ableitbare Aufgabe umfaßt, nämlich die dort erfindungsgemäß vorgeschlagenen Verfahren auch gegenständlich — soweit dieses noch nicht geschehen ist — auszubilden, wird nach dem Kennzeichen des Anspruchs 8 oder 9 gelöst.

Durch die vorgeschlagene Vorrichtung zur Durchführung des erfindungsgemäßen Verfahrens ist es erstmals möglich, sämtliche beim Betrieb von Doppelsitzventilen der einleitend gekennzeichneten Gattung relevanten Funktionen in einer gegenständlichen Lösung « aus einem Guß » zu realisieren, nämlich

das leckagefreie Schalten,
die gleichzeitige Reinigung der Sitzflächen beider Schließglieder,
die alleinige Reinigung der Sitzfläche des ggf. produktbeaufschlagten, schieberartig ausgebildeten Schließgliedes über die Zufuhr von Reinigungsmittel aus dem Leckage-Hohlraum und
die zusätzliche Anpressung des als Sitzteller ausgebildeten Schließgliedes auf seine Sitzfläche mittels einer Zusatzkraft
oder alternativ zur letztgenannten Funktion
das Ausgleichen der vom Fluid in den Leitungen auf die Schließglieder ausgeübten Druckkräfte.

Eine vorteilhafte Abwandlung der erfindungsgemäßen Vorrichtung sieht vor, daß der Antriebskolben des Schließgliedes, das bei der Öffnungsbewegung des Doppelsitzventils vom anderen Schließglied in die Offenstellung überführt wird, bei der Öffnungsbewegung des Doppelsitzventils auf seiner Ventilstange dichtend verschiebbar ist, während er in entgegengesetzter Verschieberichtung an dieser über einen Bund formschlüssig angreift. Durch diese einseitig wirksame Trennung zwischen Antriebskolben und zugeordneter Ventilstange wird eine Vereinfachung der Ansteuerung erreicht. Während ohne diese Trennung in der Offenstellung des Doppelsitzventils gleichzeitig zwei Räume anzusteuern sind (Raum zwischen den Kolben und ein weiterer Raum), reduziert sich die Ansteuerung bei Trennung des Antriebskolbens von seiner Ventilstange auf die Druckbeaufschlagung des Raumes zwischen den Kolben.

Eine weitere vorteilhafte Ausgestaltung der Vorrichtung gemäß der Erfindung vereinfacht die Teilhubbegrenzung der Antriebskolben dadurch, daß diese über einen am Gehäuse der Betätigungseinrichtung angeordneten Anschlag, der sich im Raum zwischen den Antriebskolben befindet, begrenzt wird. Diese Maßnahme ist bei Schließgliedkonfigurationen möglich, bei denen das schieberartig ausgebildete Schließglied das andere in die Offenstellung überführt.

Nach einer vorteilhaften Ausgestaltung der Vorrichtung gemäß der Erfindung ist der Raum zwischen den Antriebskolben über eine Zuleitung in der oder innerhalb des Ringspalts um die Ventilstange mit der Umgebung des Doppelsitzventils verbunden. Dadurch wird auf einfache und von der Ventilhubbewegung unabhängige Weise eine Zuleitung für Druckmittel zum Raum zwischen den Antriebskolben, der mit der Schaltbewegung des Doppelsitzventils seine Größe und Lage ändert, geschaffen.

Ausführungsbeispiele der Erfindung sind in der Zeichnung dargestellt und werden im folgenden näher beschrieben.

Es zeigen :

Figur 1.1 einen Mittelschnitt durch eine erste Ausführungsform (linker Teil der Darstellung im Bereich einer Betätigungseinrichtung) und eine zweite Ausführungsform (rechter Teil der Darstellung im Bereich einer Betätigungseinrichtung) der Vorrichtung zur Durchführung des erfindungsgemäßen Verfahrens in der Schließstellung ;

Figur 1.1a eine Funktionstabelle mit allen Schaltfolgen, die bei einer Vorrichtung gemäß Figur 1.1 möglich sind, wobei die Schließlage des Doppelsitzventils gemäß Figur 1.1 besonders hervorgehoben ist ;

Figur 1.2 einen Mittelschnitt durch die vorgenannte Ausführungsform der Vorrichtung in deren sogenannter « Abholstellung » ;

Figur 1.3 einen Mittelschnitt durch die vorgenannte Ausführungsform der Vorrichtung in deren Offenstellung ;

Figur 1.4.1 einen Mittelschnitt durch die vorgenannte Ausführungsform der Vorrichtung in deren Sitzreinigungsstellung, wobei das Reinigungsmittel über den Leckage-Hohlraum zugeführt wird ;

Figur 1.4.2 einen Mittelschnitt durch die vorgenannte Ausführungsform der Vorrichtung in deren Sitzreinigungsstellung, wobei das Reinigungsmittel über ein Ventilgehäuseteil herangeführt wird ;

Figur 2 einen Mittelschnitt durch eine andere Ausführungsform der Vorrichtung gemäß der Erfindung zur Durchführung des erfindungsgemäßen Verfahrens, wobei die beiden Schließglieder gegenüber der Vorrichtung gemäß Figur 1.1 umgekehrt konfiguriert sind und sich in ihrer Schließlage befinden ;

Figur 2a eine sämtliche Schaltzustände der Vorrichtung gemäß Figur 2 beschreibende Funktionstabelle, wobei die Schließlage besonders hervorgehoben ist ;

Figur 3 eine Übersicht über die der Erfindung zugrunde liegenden Konfigurationen von zwei Schließgliedern in schematischer Darstellung und dazu jeweils die Zuordnung der zur Durchführung des erfindungsgemäßen Verfahrens bzw. Lösung der erfingungsgemäßen Teilaufgaben notwendigen Schaltlogik in Form vollständiger Funktionstabellen.

In Figur 1.1 ist eine erste (linker Teil der Darstellung im Bereich der Betätigungseinrichtung 11) vorteilhafte Ausführungsform der Vorrichtung zur Durchführung des erfindungsgemäßen Verfahrens dargestellt, bei der ein untenliegendes Schließglied 5 als Sitzteller ausgebildet ist, während ein obenliegendes Schließglied 4 schieberartige Form aufweist. Das Schließglied 5 hat eine im wesentlichen in axialer Richtung auf eine zugeordnete Sitzfläche 6a wirkende, nicht näher bezeichnete Dichtung, während das Schließglied 4 innerhalb einer zwei Ventilgehäuseteile 1, 2 miteinander verbindenden Zylinderbohrung 6 über eine am äußeren Umfang angeordnete, nicht näher bezeichnete Dichtung gleitend und radial dichtend verschiebbar ist. Ventilstangen 4a bzw. 5a der Schließglieder 4, 5 weisen in eine Richtung, fassen teleskopartig ineinander und sind in eine Betätigungseinrichtung 11 hineingeführt. Dort sind sie mit jeweils einem Antriebskolben 4b bzw. 5b ausgestattet, die jeweils wenigstens einseitig federbeaufschlagt sind und innerhalb und mit der Betätigungseinrichtung 11 drei voneinander getrennte, wahlweise und unabhängig voneinander ansteuerbare Räume 10a, 10b, 10c bilden. Der Raum 10a dient allein und zuerst der Ansteuerung der außenliegenden Ventilstange 4a, der Raum 10c dient allein und zuerst der Ansteuerung der innenliegenden Ventilstange 5a, während über den Raum 10b zwischen den

4

Antriebskolben 4b, 5b gegebenenfalls sowohl der eine als auch der andere Antriebskolben über eine Zuleitung 5d innerhalb der Ventilstange 5a angesteuert wird. Die dargestellte Ausführungsform weist — dieses ist grundsätzlich nicht immer so — innerhalb des Raumes 10c eine Hauptfeder 8 auf, die sich einerseits gegen einen nicht näher bezeichneten Boden der Betätigungseinrichtung 11 und andererseits gegen den mit der innenliegenden Ventilstange 5a verbundenen Antriebskolben 5b abstützt. Innerhalb des Raumes 10a ist eine Nebenfeder bzw. ein federnder Anschlag 7 angeordnet, die bzw. der sich einerseits gegen den anderen Boden der Betätigungseinrichtung 11 und andererseits gegen den mit der außenliegenden Ventilstange 4a verbundenen Antriebskolben 4b abstützt. Sowohl der Raum 10a als auch der Raum 10c verfügen über einen Druckmittelanschluß, wobei jeder Anschluß, der zu dem die Hauptfeder 8 aufnehmenden Raum führt, die Kennzeichnung c, während der andere Raum die Kennzeichnung a erhält. Die Zuleitung 5d zum Raum 10b erhält die Anschlußkennzeichnung b. In eine oberhalb der Betätigungseinrichtung 11 an der innenliegenden Ventilstange 5a angeordnete Ausnehmung 5c greift ein Riegel 9a einer steuerbaren Blockiereinrichtung 9 formschlüssig ein, wobei deren Druckmittelanschluß mit d gekennzeichnet ist. Ein zwischen den teleskopartig ineinanderfassenden Ventilstangen 4a, 5a gebildeter, nicht näher bezeichneter Ringspalt mündet einerseits in einen sowohl in der Schließ- als auch in der Offenstellung des Doppelsitzventils zwischen den Schließgliedern 4, 5 gebildeten Leckage-Hohlraum 3 ein und ist andererseits mit einem Reinigungsmittelanschluß 4c ausgestattet. Aus seiner Schließlage heraus kann das Schließglied 5 eine durch den Riegel 9a begrenzte axiale Teilhubbewegung s1 ausführen. Eine gegenüber dem obenliegenden Schließglied 4 aus der Schließlage heraus ausführbare relative Teilhubbewegung des untenliegenden Schließgliedes 5 ist mit s3 bezeichnet. Der Abstand der Antriebskolben 4b, 5b ist in der Schließstellung des Doppelsitzventils mit s2 angegeben.

Die Funktionstabelle (Figur 1.1a) verdeutlicht, welche Druckmittelanschlüsse a bis d in der Schließstellung « 1 » der dargestellten Ausführungsform der Vorrichtung gemäß Figur 1.1 angesteuert sind (vgl. Zeile « 1 »). Dabei bedeutet a = 0, daß der Anschluß a nicht angesteuert ist und somit der zugeordnete Raum 10a nicht mit Druckmittel beaufschlagt wird ; c = 1 bedeutet, daß der Anschluß c angesteuert ist und somit der zugeordnete Raum 10c mit Druckmittel beschickt ist ; b = 0 bedeutet, daß der Anschluß b nicht angesteuert ist und somit der zugeordnete Raum 10b drucklos ist ; d = (0) bedeutet, daß der Anschluß d nicht angesteuert ist und sich somit die federschließende Blockiereinrichtung 9 in ihrer Ruhelage befindet, in der der Riegel 9a die innenliegende Ventilstange 5a formschlüssig arretiert. Ein in Klammern gesetzter Ansteuerungszustand der Blockiereinrichtung 9 soll anzeigen, daß zur Realisierung des vorliegenden Schaltzustandes des Doppelsitzventils das Vorhandensein der Blockiereinrichtung 9 nicht zwingend notwendig ist. Die weiteren aus der Funktionstabelle gemäß Figur 1.1a ersichtlichen Schaltzustände der Anschlüsse a, c, b und d und der zugeordneten erfindungsgemäßen Vorrichtung sind in den Zeilen « 2, 3, 4.1 und 4.2 » dargestellt. Dabei bedeuten der Schaltzustand « 2 » die sog. « Abholstellung », der Schaltzustand « 3 » die Offenstellung, der Schaltzustand « 4.1 » die Sitzreinigung R1 und der Schaltzustand «4.2 » die Sitzreinigung R2 des Doppelsitzventils. Auf diese vorgenannten Schaltzustände wird in den nachfolgenden Figuren 1.2 bis 1.4.2 noch näher eingegangen.

Der Antriebskolben 5b wird über die Hauptfeder 8 mit einer Kraft beaufschlagt. Zusätzlich zu dieser Kraft wirkt in gleicher Richtung eine Zusatzkraft, die das als Sitzteller ausgebildete Schließglied 5 auf die Sitzfläche 6a preßt. Das obenliegende Schließglied 4 stützt sich über die außenliegende Ventilstange 4a und den zugeordneten Antriebskolben 4b auf der Nebenfeder 7 ab, wobei letztere durch nicht näher bezeichnete Vorkehrungen geklammert ist und somit lediglich das Eigengewicht der Anordnung 4, 4a, 4b und gegebenenfalls die aus einem Produktdruck im Ventilgehäuseteil 1 resultierende und auf das obenliegende Schließglied 4 wirkende Kraft aufzunehmen hat. In der Darstellung gemäß Figur 1.1 ist angenommen, daß vom Kolben 4b keinerlei Kraftwirkungen auf die Nebenfeder 7 ausgehen. Falls im Ventilgehäuseteil 2 Produkt unter Druck ansteht, so kann dieses in Verbindung mit der wirksamen Fläche des Schließgliedes 5 letzteres von seiner Sitzfläche 6a nur dann aufdrücken, wenn die öffnende Kraft größer ist als die algebraische Summe aus der Vorspannkraft der Hauptfeder 8 und der Zusatzkraft Pc × A, wobei die Größe Pc den Druck des über den Anschluß c herangeführten Druckmittels und die Größe A die wirksame Kolbenfläche des Antriebskolbens 5b bezeichnet. Sollte dennoch das untenliegende Schließglied 5 beispielsweise durch Druckschläge von seiner Sitzfläche 6a angehoben werden, so wird dessen Hubbewegung s1 durch den Riegel 9a der Blokiereinrich tung 9 begrenzt. Da die Teilhubbewegung s3 der Ventilstange 5a zweckmäßigerweise größer als deren Teilhubbewegung s1 gegenüber dem Riegel 9a ausgeführt ist, kann das im Ventilgehäuseteil 2 unter Druck anstehende Medium über den Leckage-Hohlraum 3 und die nach unten aus dem Ventilgehäuseteil 2 herausgeführte hohle Ventilstange des Schließgliedes 5 drucklos abgeführt werden. Ein Druckaufbau im Leckage-Hohlraum 3 ist somit ausgeschlossen. Selbst wenn man einmal hypothetisch einen Druckaufbau annimmt, so kann bei der vorgeschlagenen Ausführungsform der erfindungsgemäßen Vorrichtung das obenliegende, schieberartig ausgebildete Schließglied 4 nicht so weit in Richtung des produktführenden Ventilgehäuseteils 1 verschoben werden, daß es seine Schließstellung innerhalb der Zylinderbohrung 6 verläßt, da es zuvor nach Verschiebung um den Abstand s2 + s1 mit seinem Antriebskolben 4b am Antriebskolben 5b, der über die innenliegende Ventilstange 5a am Riegel 9a der Blockiervorrichtung 9 arretiert ist, zur Anlage kommt.

Weitere Schaltzustände der Ausfürungsform der erfindungsgemäßen Vorrichtung gemäß Figur 1.1 sind in den nachfolgenden Figuren 1.2 bis 1.4.2 dargestellt. Figur 1.2 zeigt die erfindungsgemäße Vorrichtung in ihrer sogenannten « Abholstellung » « 2 ». Diese « Abholstellung » ist dadurch gekennzeichnet, daß vor der Öffnungsbewegung des Schließgliedes 5 das Schließglied 4 aus seiner Ruhelage heraus an das in seiner Schließlage befindliche Schließglied 5 herangeführt und mit diesem derart gekoppelt wird, daß der Leckage-Hohlraum 3 zu der ihn umschließenden Zylinderbohrung 6 dicht abgeschlossen ist. Zur Erzeugung dieses Schaltzustandes der erfindungsgemäßen Vorrichtung muß, ausgehend von der vorangegangenen Schließstellung des Doppelsitzventils, der Anschluß b angesteuert werden. Die Zusatzkraft, hervorgerufen durch die Ansteuerung des Anschlusses c, ist nach wie vor wirksam. Die Blockiervorrichtung 9, die, wie, vorstehend bereits erwähnt, nicht notwendigerweise vorhanden sein muß, ist über ihren Anschluß d angesteuert; ihr Riegel 9a hat die Ausnehmung 5c innerhalb der innenliegenden Ventilstange 5a verlasen. Die Ansteuerungszustände der einzelnen Anschlüsse a bis d sind aus der Funktionstabelle in Figur 1.1, Zeile « 2 », ersichtlich :

$$a = 0 ; c = 1 ; b = 1 ; d = (1).$$

Durch das über den Druckmittelanschluß b und die Zuleitung 5d innerhalb des Raumes 10b anstehende Druckmittel werden die Antriebskolben 4b, 5d auseinandergedrückt. Am Antriebskolben 5b greifen einerseits die Kraft der Hauptfeder 8 und die Zusatzkraft $Pc \times A$ an und andererseits wirkt eine aus dem im Raum 10b anstehenden Druckmittel resultierende Kraft $Pb \times A$. Die letztgenannte Kraft wirkt gleichermaßen auf den Antriebskolben 4b des obenliegenden Schließgliedes 4 und verschiebt ihn dabei gegen die vorgespannte und geklammerte Nebenfeder 7 so weit nach unten, daß das Schließglied 4 am Schließglied 5 zur Anlage kommt. An der Kontaktstelle der beiden Schließglieder 4, 5 stützt sich die durch die außenliegende Ventilstange 4a hindurchgeleitete Kraft $Pb \times A$ noch einmal ab, so daß insgesamt gesehen das untenliegende Schließglied 5, sein Ventilstange 5a und der zugeordnete Antriebskolben 5b unter der Kraft $Pb \times A$ keine nach außen wirksame Kraftwirkung erfahren. Die letztgenannten Bauteile werden lediglich unter der Kraft $Pb \times A$ intern verspannt. Das untenliegende Schließglied 5 wird mit der resultierenden Kraft aus der Kraft der Hauptfeder 8 und der Zusatzkraft $Pc \times A$ auf seine Sitzfläche 6a gedrückt. Weder aus dem einen noch aus dem anderen Ventilgehäuseteil 1, 2 kann beispielsweise Produkt in den Leckage-Hohlraum 3 gelangen. In der Schließlage des Doppelsitzventils sind die Federkräfte der Haupt- und Nebenfeder so bemessen, daß bei Ausfall des Druckmittels und damit bei Wegfall der Zusatzkraft eine eindeutige Schließlage sichergestellt ist.

In Figur 1.3 ist nunmehr die Offenstellung « 3 » der erfindungsgemäßen Vorrichtung gemäß den Figuren 1.1 und 1.2 dargestellt. Die Funktionstabelle nach Figur 1.1a beschreibt in Zeile « 3 » die zugeordneten Ansteuerungszustände der Anschlüsse a bis d :

$$a = 1 ; c = 0 ; b = 1 ; d = (1).$$

Unter der Kraft $Pb \times A$ bleibt während der gesamten Offenstellung « 3 » des Schließgliedes 5 die Kopplung der Schließglieder 4, 5 aufrechterhalten. Unter dem Einfluß des im Raum 10a anstehenden Druckmittels und der daraus auf den Antriebskolben 4b resultierenden Kraft $Pa \times A^*$ hat sich der Antriebskolben 4b bis in seine mögliche Endlage aufwärts bewegt. Die geklammerte Nebenfeder 7 wird dabei verlassen ; sie übt keinerlei Kraftwirkung auf den Antriebskolben 4b aus. Über die im Raum 10b wirksamen Druckkräfte und die daraus auf die benachbarten Antriebskolben 4b, 5b wirksame Verspannung verhalten sich die Schließglieder 4, 5, die Ventilstangen 4a, 5a und die zugeordneten Antriebskolben 4b, 5b wir ein einziges Bauteil, welches durch die Kraft $Pa \times A^*$ gegen die Kraft der Hauptfeder 8 insgesamt verschliebbar ist. Da die dem Raum 10a zugewandte wirksame Fläche $A^*$ grundsätzlich immer kleiner ist als die dem Raum 10b zugewandte Fläche A und gleichzeitig die Drücke des Druckmittels Pa und Pb in der Regel gleich sind, bleibt die Kopplung der Schließglieder 4, 5 in jedem Fall unter der öffnenden Kraft $Pa \times A^*$ wegen $Pb \times A > Pa \times A^*$ erhalten. Für Drücke $Pb > Pa$ läßt sich die Kopplungskraft weiter erhöhen.

Die Schließbewegung der erfindungsgemäßen Vorrichtung vollzieht sich sinngemäß in umgekehrter Reihenfolge. Ein Blick auf die Ansteuerungszustände der Abholstellung « 2 », dargestellt in der Funktionstabelle gemäß Figur 1.1a, Zeile « 2 », zeigt, daß zunächst die Schließglieder 4, 5 in gekoppelter Stellung bis zur Schließlage des Schließgliedes 5 abgesenkt werden. Dies geschieht durch Wegnahme der Ansteuerung am Anschluß a. Vor, während oder nach der Absenkung kann bereits die Zusatzkraft über den Anschluß c auf das Schließglied 5 aufgebracht werden. Erst nach Erreichen der Schließlage des Schließgliedes 5 wird das Schließglied 4 vom Schließglied 5 getrennt und in seine Ruhelage überführt. Die Trennung erfolgt durch Wegnahme der Ansteuerung am Anschluß b unter des Wirkung der Kraft F7 der Nebenfeder bzw. des federnden Anschlags 7. Die letztlich in der Abholstellung « 2 » oder Offenstellung « 3 » der erfindungsgemäßen Vorrichtung wirksame Koppelkraft der Schließglieder 4, 5 ergibt sich, wie sich leicht nachweisen läßt, zu :

$$\text{Koppelkraft in der Abholstellung } Fk = Pb \times A - F7 ;$$

Koppelkraft in der Offenstellung $Fk = Pb \times A - Pa \times A^*$.

In Figur 1.4.1 ist die Sitzreinigung R1 « 4.1 » der erfindungsgemäßen Vorrichtung dargestellt, wobei das Reinigungsmittel R1 über den Leckage-Hohlraum 3 an die Sitzfläche des Schließgliedes 4 herangeführt wird. Die Ansteuerungszustände hierfür sind aus Zeile « 4.1 » der Funktionstabelle gemäß Figur 1.1a ersichtlich. Das Schließglied 5 wird unter der Wirkung der Kraft der Hauptfeder 8 und der Zusatzkraft $Pc \times A$ auf seine Sitzfläche 6a gedrückt. Unter der Wirkung der Kraft $Pa \times A^*$ wurde der Antriebskolben 4b um den aus Figur 1.1 ersichtlichen Teilhub s2 nach oben bis zum Anschlag am Antriebskolben 5b verschoben. Die Nebenfeder 7 übt in dieser Stellung des Antriebskolbens 4b auf letzteren keine Kraftwirkung mehr aus. Durch die Teilhubbewegung s2 des Schließgliedes 4 wurde dessen Sitzfläche freigelegt, so daß Reinigungsmittel R1 über den Reinigungsmittelanschluß 4c, den Ringspalt zwischen den Ventilstangen 4a, 5a und den Leckage-Hohlraum 3 von außerhalb des Doppelsitzventils herangeführt werden kann.

Die Sitzreinigung R2 « 4.2 » der erfindungsgemäßen Vorrichtung mit der gleichzeitigen Reinigung beider Sitzflächen unter Verwendung des Reinigungsmittels R2 aus dem Ventilgehäuseteil 2 ist in Figur 1.4.2 gezeigt. Der zugeordnete Ansteuerungszustand der Anschlüsse a bis d ist aus Zeile « 4.2 » der Funktionstabelle gemäß Figur 1.1a ersichtlich :

$$a = 1 \; ; \; c = b = d = 0.$$

Unter dem Einfluß der Kraft $Pa \times A^*$ hat sich der Antriebskolben 4b des obenliegenden Schließgliedes 4 bis zum Anschlag am Antriebskolben 5d des untenliegenden Schließgliedes 5 verschoben. Dadurch wurde der aus Figur 1.1 ersichtliche Teilhub s3 um den ebenfalls aus Figur 1.1 ersichtlichen Abstand s2 vergrößert. Mit diesem Abstand wurden nun die beiden Schließglieder 4, 5 gemeinsam um den aus Figur 1.1 ersichtlichen Teilhub s1 gegen den Riegel 9a der Blockiervorrichtung 9 verschoben. Beide Sitzflächen sind dadurch freigelegt und können über das aus dem Ventilgehäuseteil 2 herangeführte Reinigungsmittel R2 gereinigt werden. Das Reinigungsmittel 2 gelangt danach in den Leckage-Hohlraum 3, um von dort über die nach unten herausgeführte hohle Ventilstange abzufließen. Da die öffnende Kraft $Pa \times A^*$ so ausgelegt ist, daß sie die Kraft F8 der Hauptfeder 8 in der vollen Offenstellung des Doppelsitzventils überwinden kann, ergibt sich in der dargestellten Sitzreinigungsstellung jetzt ein kräftemäßoger Überschuß $Pa \times A^* - F8$, der vom Riegel 9a der Blockiervorrichtung 9 aufgenommen wird.

Im rechten Teil der Darstellung im Bereich der Betätigungseinrichtung 11 zeigt Figur 1.1 eine zweite vorteilhaft Ausführungsform der Vorrichtung zur Durchführung des erfindungsgemäßen Verfahrens. Der augenfällige Unterschied zur ersten Ausführungsform (linke Darstellung) besteht darin, daß der Antriebskolben 4b auf seiner Ventilstange 4a in Richtung des Schließgliedes 4 dichtend verschiebbar ist, während ert in entgegengesetzter Richtung an dieser über einen Bund 4d formschlüssig angreift. Die Hauptfeder 8 befindet sich in einem Käfig 5e, 5f, der die Vollhubbewegung des Schließgliedes 5 begrenzt. Im Raum 10b ist eine weitere Feder 15 angeordnet, die bei der Öffnungsbewegung der Schließglieder 4, 5 diese miteinander koppelt und verspannt. Die Feder 15 und die Nebenfeder 7, auf der sich der Antriebskolben 4b abstützt, sind so bemessen, daß in der Schließstellung des Doppelsitzventils eine eindeutige Lagefixierung des schieberartig ausgebildeten Schließgliedes 4 gegenüber dem Schließglied 5 im Abstand S3 sichergestellt ist. In allen übrigen Teilen entspricht die zweite Ausführungsform der vorstehend bereits beschriebenen ersten. Im Unterschied zur Ansteuerung der Vorrichtung gemäß Figur 1.1 (linke Hälfte) wird zur Realisierung der Offenstellung der abgewandelten Ausführungsform gemäß Figur 1.1 (rechte Hälfte) lediglich der Raum 10b angesteuert (vgl. Zeile « 3 » der Funktionstabelle gemäß Figur 1.1a). Bei dieser Ansteuerung bewegt sich der Antriebskolben 5b aufwärts. Infolge diese Bewegung werden das schließglied 4 und die zugeordnete Ventilstange 4a ebenfalls aufwärts bewegt. Der Antriebskolben 4b kann erfindungsgemäß dieser Bewegung nicht folgen, da er unter der Kraftwirkung des im Raum 10b anstehenden Druckmittels relativ zu seiner Ventilstange 4a verschiebbar ist und am unteren Boden der Betätigungseinrichtung 11 zur Anlage kommt. Alle übrigen Ansteuerungszustände in den anderen Schaltzuständen sind gegenüber jenen der Funktionstabelle gemäß Figur 1 (linke Hälfte) unverändert.

Die einseitig wirksame Trennung des die Ventilöffnungs- und Ventilschließbewegung ursächlich bewirkenden Antriebskolbens von seiner Ventilstange läßt sich auch auf die noch nachfolgend beschriebene Schließgliedkonfiguration anwenden. Die diesbezüglich an der Ausührungsform gemäß der figur 1.1 erzielbaren Vorteile sind auch an der anderen Ausführungsform gegeben.

Auf die weitere Erläuterung konstruktiver Einzelheiten und des Funktionsablaufes wird verzichtet. Sie ergeben sich für den Fachmann in naheliegender Weise auf der Zeichnung und der übrigen Beschreibung.

Eine weitere Ausführungsform der Vorrichtung zur Durchführung des erfindungsgemäßen Verfahrens mit einer gegenüber der Ausführungsform gemäß Figur 1.1 grundsätzlich anders konfigurierten Schaltgliedanordnung ist in Figur 2 dargestellt. Vergleicht man die Schaltgliedkonfiguration mit jener der Ausführungsform gemäß Figur 1.1, so stellt man fest, daß sich der Unterschied dadurch ergibt, daß eine Spiegelung an der Trennebene zwischen den Schließgliedern 4, 5 vorgenommen wurde. Diese Feststellung läßt sich uneingeschränkt auch auf die Konfiguration der Betätigungseinrichtung 11 übertragen. Während die Konfiguration der Ventilstange 4a, 5a mit ihren zugeordneten Antriebskolben 4b, 5b unverändert übernommen werden kann, werden die von den Antriebskolben 4b, 5b begrenzten, außenliegenden Räume um den Raum 10b waagerecht gespiegelt. Dadurch ergibt sich zwangsläufig auch eine Vertauschung der Anschlußbezeichnungen a und c. Ein Vergleich, der die Ansteuerungszustände der Anschlüsse a bis d in den möglichen Schaltzuständen « 1 » bis « 4 » beschreibenden Funktionstabelle gemäß Figur 2a mit jener gemäß Figur 1.1a zeigt, daß die Schaltlogik der Ausführungsform gemäß Figur 2 mit jener gemäß Figur 1 völlig identisch ist.

Dieser Zusammenhang wird auch aus der zusammenfassenden Darstellung gemäß Figur 5 in beeindruckender Weise ersichtlich. Für die Kräfteverhältnisse an den Antriebskolben 4b, 5b gilt gleiches, wenn man davon ausgeht, daß eine Spiegelung in vorstehend erläuterter Weise vorzunehmen ist. In der Schließvorstellung « 1 » der dargestellten Ausführungsform ist die Kraft F8 der Hauptfeder 8 so zu bemessen, daß in der Abholstellung « 2 » gilt:

$$F8 + Pc \times A^* > Pb \times A,$$

da die im Raum 10b am Antriebskolben 4b wirksame Kolbenfläche A größer ist als die andererseits am gleichen Kolben im Raum 10c wirksame Kolbenfläche A*.

Für die Offenstellung « 3 », die Sitzreinigung R1 « 4.1 » und die Sitzreinigung R2 « 4.2 » gelten die zu den Ausführungsformen gemäß Figur 1.1 getroffenen Aussagen sinngemäß. Der den Teilhub der innenliegenden Ventilstange bestimmende Abstand s1 innerhalb der Ausnehmung 5c befindet sich oberhalb des Riegels 9a der Blockiervorrichtung g, da die Öffnungsbewegung des dargestellten Doppelsitzventils nach unten erfolgt.

In Figur 3 sind die der Erfindung zugrunde liegenden Schließgliedkonfigurationen in Verbindung mit den zugeordneten Funktionstabellen noch einmal zusammenfassend dargestellt. Ein Funktions- und Wirkungsprinzip ist beiden Schließgliedkonfigurationen gemeinsam. Es ist die Kopplung der Schließglieder 4, 5 in der Abholstellung « 2 » und in der Offenstellung « 3 » durch Auseinanderfahren der Antriebskolben 4b, 5b, wodurch die erfindungsgemäß herausgestellte Teilaufgabe, das Doppelsitzventil leckagefrei zu schalten, gelöst wird. Man erkennt in beiden Fällen, daß sowohl in der Abhol- als auch in der Offenstellung « 2 » bzw. « 3 » der Raum zwischen den Antriebskolben 4b, 5b angesteuert wird (b=1). Darüber hinaus wird eine weitere erfindungsgemäß herausgestellte Aufgabe, nämlich die gleichzeitige Reinigung der Sitzflächen beider Schließglieder sicherzustellen, gelöst (vgl: Zeile « 4.2 », Ansteuerungen a und c). Eine Lösung dieser Teilaufgaben war aus dem europäischen Patent 00 44 517 lediglich in gegenständlicher Form für die Schließgliedkonfiguration gemäß der vorgenannten Figur 1 bekannt geworden. Daß auch für die dritte erfindungsgemäß herausgestellte Teilaufgabe, nämlich die alleinige Reinigung der Sitzfläche des produktbeaufschlagten, schieberartig ausgebildeten Schließgliedes sicherzustellen, nunmehr gegenständliche Lösungen existieren, zeigt Zeile « 4.1 » in Figur 3. Des weiteren kann in beiden Fällen das als Sitzteller ausgebildete Schließglied 5 bzw. 4 wahlweise mit einer Zusatzkraft auf seine Sitzfläche gedrückt werden (vgl. Zeilen « 1 » und « 2 », Ansteuerung c = 1).

Die erfindungsgemäß einseitig wirksame Trennung des Antriebskolbens 4b von seiner Ventilstange 4a ist am Beispiel der Schließgliedkonfigurationen gemäß Figur 1 (rechte Hälfte) ausführlich dargestellt. Diese Trennung ist, wie vorstehend bereits erläutert, auch auf die andere Schließgliedkonfiguration übertragbar. Man erkennt in Figur 3 (vgl. Zeile « 3 », Spalte a), daß sich die diesbezüglichen Ausführungsformen gegenüber jenen ohne Trennung lediglich in der Ansteuerung des Raumes 10a unterscheiden. Während ohne Trennung des Antriebskolbens 4b bzw. 5b von seiner Ventilstange 4a bzw. 5a der Anschluß a den Ansteuerungszustand a = 1 besitzt, erhält er im Falle einer Trennung den Ansteuerungszustand a = 0.

Was die Anordnung der Blockiervorrichtung 9 im Zusammenwirken mit der innenliegenden Ventilstange 5a betrifft, so ist die Anordnung gemäß den Figuren 1.1 bis 2 nur beispielhaft gewählt worden. Es ist ebenso denkbar, daß die mit ortsfesten Gehäuseteilen des Doppelsitzventils verbundene Blockiervorrichtung 9 die außenliegende Ventilstange 4a arretiert. Im übrigen handelt es sich bei der in den Figuren 1.1 bis 2 dargestellten Blockiervorrichtung 9 um eine mehr die Wirkungsweise als die tatsächliche Raumform beschreibende Schemaskizze. Es stehen hier eine Reihe von realisierbaren Bauformen zur Verfügung; eine davon ist beispielsweise -allerdings in Kombination mit einer die Ventilstangen miteinander verriegelnden Vorkehrung - aus der EP 00 44 517 bekannt.

Welcher der vorgeschlagenen Ausführungsformen der Vorrichtung zur Durchführung des erfindungsgemäßen Verfahrens in der Praxis der Vorzug gegeben wird, läßt sich nur anhand von konkreten Anwendungsfällen beurteilen. Da die beiden Schließgliedkonfigurationen leckagefreies Schalten mit der uneingeschränkten Möglichkeit der Reinigung sowohl beider Sitzflächen gleichzeitig als auch der des produktbeaufschlagten, schieberartig ausgebildeten Schließgliedes alleine verwirklichen, wird die Auswahl von speziellen Anwendungsgegebenheiten abhängen. Soll beispielsweise ein derartiges Doppelsitzventil einen Tankauslauf schalten, so besteht meistens die Forderung, daß bei vollständiger Entleerung des Tanks auch das angeschlossene Ventilgehäuse vollständig entleert wird. Dies hat zur Folge, daß der Tank am oberen Ventilgehäuseteil anzuschließen ist, während in der Regel als Schließgliedkonfiguration die Anordnung gemäß Figur 2 zu wählen wäre. Soll beispielsweise sicher verhindert werden, daß unplanmäßig auftretende Druckerhöhungen oder Druckstöße in Leitungen das Doppelsitzventil aufdrücken, so resultiert aus dieser Forderung eine andere Schließgliedkonfiguration als wenn gerade gefordert wird, daß unplanmäßige Druckstöße durch eines der beiden Schließglieder abzufedern ist. Ist beispielsweise die Ausbaubarkeit der Schließglieder 4, 5 in Verbindung mit ihrer Ventilstange 4a bzw. 5a nach oben eine unabdingbare Forderung, so scheidet in der Regel die Ausführungsform gemäß Figur 2 aus, es sei denn, der gesamte Sitzbereich läßt sich, wie dies gelegentlich praktiziert wird, ebenfalls aus dem Ventilgehäuse demontieren.

**Patentansprüche**

1. Verfahren zur Verwirklichung eines leckagefrei schaltenden und sitzreinigungsfähigen Doppelsitzventils, insbesondere bei dessen Einsatz in der Nahrungsmittelindustrie, wobei zwei voneinander unabhängige, relativ zueinander bewegbare Schließglieder (4, 5) vorgesehen sind, die mittels einer Betätigungseinrichtung aus der Schließ- in eine Offenstellung bewegbar sind, und von denen ein ggf. produktbeaufschlagtes Schließglied (4, 5) schieberartig ausgebildet, innerhalb einer zwei Ventilgehäuseteile (1, 2) miteinander verbindenden Zylinderbohrung (6) gleitend und radial dichtend verschiebbar ist und zur Reinigung seines Sitzes um einen Teilhub in Richtung des ggf. produktführenden Ventilgehäuseteils (1 oder 2) verschoben wird, wobei gleichzeitig das andere, als Sitzteller ausgebildete Schließglied (5 bzw. 4) gegenüber dem ggf. produktbeaufschlagten um einen Teilhub verschoben wird, mit einem sowohl in der Schließ- als auch in der Offenstellung des Doppelsitzventils zwischen den Schließgliedern (4, 5) eingeschlossenen Leckage-Hohlraum (3), der mit der Atmosphäre verbunden ist, wobei das Reinigungsmittel über das andere Ventilgehäuseteil (2 bzw. 1) und/oder von außerhalb des Doppelsitzventils über den Leckage-Hohlraum (3) an die beiden durch die Teilhübe der Schließglieder freigelegten Sitzflächen herangeführt wird, gekennzeichnet durch einen Schaltvorgang des Doppelsitzventils, bei dem vor der Öffnungsbewegung des als Sitzteller ausgebildeten Schließgliedes (5 bzw. 4) das schieberartig ausgebildete Schließglied (4 bzw. 5) aus einer Ruhelage heraus an das in seiner Schließlage befindliche Schließglied (5 bzw. 4) in zur Öffnungsbewegung entgegengesetzter Richtung herangeführt und mit diesem derart gekoppelt wird, daß der Leckage-Hohlraum (3) zu der ihn umschließenden Zylinderbohrung (6) dicht abgeschlossen ist, daß über den gesamten Zeitraum der Offenstellung des als Sitzteller ausgebildeten Schließgliedes (5 bzw. 4) die Kopplung der Schließglieder (4, 5) aufrecht erhalten bleibt, daß nach der Schließbewegung des als Sitzteller ausgebildeten Schließgliedes (5 bzw. 4) das schieberartig ausgebildete Schließglied (4 bzw. 5) von dem in seiner Schließlage befindlichen Schließglied (5 bzw. 4) getrennt und in seine Ruhelage überführt wird, und daß zum Zwecke der Sitzreinigung das schieberartig ausgebildete Schließglied (4 bzw. 5) aus seiner Ruhelage in Richtung des ggf. produktführenden Ventilgehäuseteils (1 oder 2) allein verschiebbar ist.

2. Verfahren nach Anspruch 1, wobei in der Schließlage des als Sitzteller ausgebildeten Schließgliedes (5 bzw. 4) das schieberartig ausgebildete Schließglied (4 bzw. 5) in Richtung des ggf. produktführenden Ventilgehäuseteils (1 oder 2) allein verschoben wird, dadurch gekennzeichnet, daß Reinigungsmittel (R1) von außerhalb des Doppelzitzventils über den Leckage-Hohlraum (3) an die freigelegte Sitzfläche herangeführt wird.

3. Verfahren nach Anspruch 1 oder 2, dadurch gekennzeichnet, daß das von außerhalb des Doppelsitzventils bereitgestellte Reinigungsmittel (R1) bei Überschreiten eines wahlweise einstellbaren Druckes die zur Sitzreinigung des schieberartig ausgebildeten Schließgliedes (4 bzw. 5) notwendige Schaltfolge, die nach einem ventilinternen Schaltalgorythmus abläuft, ursächlich in Gang setzt.

4. Verfahren nach einem der Ansprüche 1 bis 3, dadurch gekennzeichnet, daß die zum Öffnen und Schließen des Doppelsitzventils notwendige Schaltfolge nach einem ventilinternen Schaltalgorythmus, der von außerhalb des Doppelsitzventils eingeleitet wird, abläuft.

5. Verfahren nach einem der Ansprüch 1 bis 4, dadurch gekennzeichnet, daß der Reinigungsvorgang durch mehrmals sich wiederholende Teilhubbewegungen der Schließglieder (4 bzw. 5) durchgeführt wird.

6. Verfahren nach einem der Ansprüche 1 bis 5, dadurch gekennzeichnet, daß das als Sitzteller ausgebildete Schließglied (5 bzw. 4) wahlweise mit einer Zusatzkraft auf seine Sitzfläche (6a) gedrückt wird.

7. Verfahren nach einem der Ansprüche 1 bis 6, dadurch gekennzeichnet, daß mindestens eines der Schließglieder (4, 5) im Bereich des ihm zugeordneten Ventilgehäuseteils (1 bzw. 2) derart geformt ist, daß die vom Fluid in den Leitungen (1, 2) auf die Schließglieder (4, 5) ausgeübten Druckkräfte weitgehend ausgeglichen sind.

8. Vorrichtung zur Durchführung des Verfahrens nach einem der Ansprüche 1 bis 6, wobei die Ventilstangen (4a, 5a) beider Schließglieder (4, 5) in eine Richtung weisen, teleskopartig ineinanderfassen, und wobei eine Ventilstange (5a) mit einer Betätigungseinrichtung verbunden ist, dadurch gekennzeichnet, daß die andere Ventilstange (4a) in die Betätigungseinrichtung (11) hineingeführt ist, und beide Ventilstangen (4a, 5a) in letzterer mit jeweils einem Antriebskolben (4b bzw. 5b) ausgestattet sind, wobei die wenigstens einseitig federbeaufschlagten Antriebskolben (4b bzw. 5b) innerhalb und mit der Betätigungseinrichtung (11) drei voneinander getrennte, wahlweise und unabhängig voneinander ansteuerbare Räume (10a, 10b, 10c) bilden, von denen ein Raum (10b) zwischen den Antriebskolben (4b, 5b) gebildet wird, und ein zweiter Raum (10c) die Hauptfeder (8) aufnimmt, und daß eine Ventilstange (4a oder 5a) mittels einer steuerbaren Blockiereinrichtung (9) gegen ortsfeste Bauteile des Doppelsitzventils arretierbar ist.

9. Vorrichtung zur Durchführung des Verfahrens nach Anspruch 7, wobei die Ventilstangen (4a, 5a) beider Schließglieder (4, 5) in eine Richtung weisen, teleskopartig ineinanderfassen, und wobei eine Ventilstange (5a) mit einer Betätigungseinrichtung (11) verbunden ist, dadurch gekennzeichnet, daß die andere Ventilstange (4a) in die Betätigungseinrichtung (11) hineingeführt ist, und beide Ventilstangen (4a, 5a) in letzterer mit jeweils einem Antriebskolben (4b bzw. 5b) ausgestattet sind, wobei die wenigstens einseitig federbeaufschlagten Antriebskolben (4b bzw. 5b) innerhalb und mit der Betätigungseinrichtung (11) drei voneinaner getrennte, wahlweise und unabhängig voneinander ansteuerbare Räume (10a, 10b, 10c) bilden, von denen ein Raum (10b) zwischen den Antriebskolben (4b, 5b) gebildet wird, und ein zweiter Raum (10c) die Hauptfeder (8) aufnimmt, und daß das schieberartig ausgebildete Schließglied (4 bzw. 5) einen im Ventilgehäuseteil (1, 2) dichtend geführten Ausgleichskolben (13) aufweist, der den gleichen Durchmesser besitzt wie die Zylinderbohrung (6).

10. Vorrichtung nach Anspruch 8 oder 9, dadurch gekennzeichnet, daß der Antriebskolben (4b, 5b) des Schließgliedes (4 bzw. 5), das bei der Öffnungsbewegung des Doppelsitzventils vom anderen Schließglied (5, 4) in die Offenstellung überführt wird, bei der Öffnungsbewegung des Doppelsitzventils auf seiner Ventilstange (4a bzw. 5a) dichtend verschiebbar ist, während er in entgegengesetzter Verschieberichtung an dieser über einen Bund (4d bzw. 5d) formschlüssig angreift.

11. Vorrichtung nach einem der Ansprüche 8 bis 10, dadurch gekennzeichnet, daß der Raum (10b) zwischen den Antriebskolben (4b, 5b) über eine Zuleitung (5d) in der oder innerhalb des Ringspaltes um die Ventilstange (5a) mit der Umgebung des Doppelsitzventils verbunden ist.

## Claims

1. A method for realizing a leakage-free switching double seat valve adapted for cleaning the seat surfaces, in particular during its use in the food processing industry, wherein there are provided two closing elements (4, 5) movable independently of each other and relatively to each other, which can be moved from the closed into an open position by means of an actuation device, and of which one closing element (4, 5) possibly acted upon by product is structurally slide-like for sliding and radially-sealing movement within a cylinder bore (6) connecting two valve casing parts (1, 2) and is displaced for cleaning its seat by a partial lift toward the valve casing part (1 or 2) possibly carrying the product, while simultaneously the other closing element (4 or 5) which is designed as seat disk is displaced by a partial lift in respect of the one possibly acted upon by product, with a leakage cavity (3) enclosed between the closing elements (4, 5) both in the closed and in the open position of the double seat valve and connected to the atmosphere, the cleansing agent being advanced to the two seat surfaces being exposed by the partial lifts of the closing elements via the other valve casing part (2 or 1, respectively) and or from outside the double seat valve via the leakage cavity (3), characterized by a switching operation of the double seat valve, by which prior to the opening movement of the closing element (5 or 4, respectively) designed as seat disk the structurally slide-like closing element (4 or 5, respectively) in advanced from a resting position towards the closing element (5 or 4, respectively) being in its closed position and coupled to it in such a manner that the leakage cavity (3) is tightly closed against the cylinder bore (6) enclosing it, in that the coupling of the closing elements (4, 5) is maintained throughout the entire period of the open position of the closing element (5 or 4, respectively) designed as seat disk, in that after the closing movement of the closing element (5 or 4, respectively) designed as seat disk the structurally slide-like closing element (4 or 5, respectively) is separated from closing element (5 or 4, respectively) being in its closed position and conducted to its resting position, and in that for the purpose of cleaning the seat the structurally slide-like closing element (4 or 5, respectively) is separately movable from its resting position in direction of the valve casing parts (1 or 2) possibly carrying product.

2. A method according to claim 1 wherein in the closed position of closing element (5 or 4, respectively) designed as seat disk, the structurally slide-like closing element (4 or 5, respectively) is displaced separately in direction of the possibly product-carrying valve casing part (1 or 2), characterized in that cleansing agent (R1) is advanced from outside the double seat valve through the leakage cavity (3) to the exposed seat surface.

3. A method according to claim 1 or 2, characterized in that the cleansing agent (R1) provided from outside the double seat valve causaly initiates, upon exceeding a selectively adjustable pressure, the switching sequence proceeding as a valve internal switching algorythm, which is necessary for the seat cleaning of the structurally slide-like closing element (4 or 5, respectively).

4. A method according to any one of claims 1 to 3, characterized in that the switching sequence necessary for opening and closing the double seat valve proceeds according to a valve-internal switching algorythm which is initiated from outside the double seat valve.

5. A method according to any one of claims 1 to 4, characterized in that the cleaning operation is

## EP 0 208 126 B1

carried out by several times repeated partial lift movements of closing elements (4 or 5, respectively).

6. A method according to any one of claims 1 to 5, characterized in that the closing element (5 or 4, respectively) structurally designed as seat disk is selectively pressed on its seat surface (6a) by an additional force.

7. A method according to any one of claims 1 to 6, characterized in that at least one of closing elements (4, 5) within the area of valve casing part (1 or 2, respectively) allocated thereto, is shaped such that the pressures exerted by the fluids in the conduits (1, 2) onto the closing elements (4, 5) are compensated to the largest extent.

8. An apparatus for performing the method according to any one of claims 1 to 6, wherein the valve stems (4a, 5a) of both closing elements (4, 5) point in one direction, engage each other in a telescopic manner, and wherein one valve stem (5a) is connected with an actuating device, characterized in that the other valve stem (4a) extends into the actuating device (11), and in the latter each of the valve stems (4a, 5a) is equipped with a drive piston (4b or 5b, respectively), wherein the at least on one side spring-biased drive pistons (4b or 5b, respectively) from within and with the actuating device (11) three spaces (10a, 10b, 10c) separate from one another and selectable alternatively and independently from one another, a space (10b) of which is defined between the drive pistons (4, 5b) and a second space (10c) takes up the main spring (8), and in that a valve stem (4a or 5a, respectively) can be fixed by means of a controllable blocking device (9) against stationary structural elements of the double seat valve.

9. An apparatus for performing the method according to claim 7, wherein the valve stems (4a, 5a) of both closing elements (4, 5) point in one direction, engage each other in a telescopic manner, and wherein one valve stem (5a) is connected with an actuating device, characterized in that the other valve stem (4a) extends into the actuating device (11), and in the latter each of the valve stems (4a, 5a) is equipped with a drive piston (4b or 5b, respectively), wherein the at least on one side spring-biased drive pistons (4b or 5b, respectively) form within and with the actuating device (11) three spaces (10a, 10b, 10c) separate from one another and selectable alternatively and independently from one another, a space (10b) of which is defined between the drive pistons (4b, 5b) and a second space (10c) takes up the main spring (8), and that the structurally slide-like closing element (4 or 5, respectively) comprises a sealingly guided compensating piston (13) having the same diameter as the cylinder bore (6).

10. An apparatus according to claim 8 or 9, characterized in that the drive piston (4b, 5b) of closing element (4 or 5, respectively) which in the opening movement of the double seat valve is transferred to the open position by the other closing element (5, 4), and which in the openig movement of the double seat valve can be sealingly displaced on its valve stem (4a or 5a, respectively) while engaging it form-closed in opposite displacement direction via a collar (4d or 5d, respectively).

11. An apparatus according to any one of claims 8 to 10, characterized in that the space (10b) between the drive pistons (4b, 5b) communicates with the environments of the double seat valve through a pipe (5d) in or within the annular gap around valve stem (5a).

## Revendications

1. Procédé pour faire fonctionner une vanne à double siège, à fermeture sans fuite et nettoyage des sièges, en particulier dans son emploi dans l'industrie de l'alimentation, vanne dans laquelle il est prévu deux éléments de fermeture (4, 5), indépendants l'un de l'autre et mobiles l'un par rapport à l'autre, qui sont déplaçables, au moyen d'un dispositif d'actionnement, de la position de fermeture à la position d'ouverture, l'un de ces éléments de fermeture (4, 5), éventuellement en contact avec le produit est constitué comme un tiroir et, est déplaçable en coulissant avec étanchéité dans le sens radial à l'intérieur d'un alésage cylindrique (6) qui relie ensemble deux parties (1, 2) du corps de vanne et, pour nettoyer son siège, se déplace d'une course partielle en direction de la partie (1 ou 2) du corps de vanne amenant éventuellement le produit, et dans laquelle en même temps l'autre élément de fermeture (5 ou 4), constitué comme un élément se déplace d'une course partielle par rapport à l'élément éventuellement alimenté en produit, avec une chambre de fuite (3), incluse entre les éléments de fermeture (4, 5) aussi bien dans la position de fermeture que dans la position d'ouverture de la vanne à double siège, et reliée à l'atmosphère, l'agent de nettoyage arrivant par l'intermédiaire de l'autre partie (2 ou 1) du corps de vanne et/ou de l'extérieur de la vanne à double siège et, par l'intermédiaire de la chambre de fuites (31) jusqu'aux deux surfaces de siège qui se trouve exposées par suite des courses partielles des éléments de fermeture, ledit procédé étant caractérisé en ce qu'il comporte une opération de fermeture de la vanne à double siège, dans laquelle, avant le mouvement d'ouverture de l'élément de fermeture (5 ou 4) formant clapet, l'élément de fermeture formant tiroir (4 ou 5) est déplacé dans la direction opposée au mouvement d'ouverture, à partir d'une position de repos jusqu'à l'autre élément de fermeture (5 ou 4), qui se trouve dans sa position de fermeture, et est accouplé à celui-ci ; en ce que la chambre de fuite (3) est close avec étanchéité par rapport à l'alissage cylindrique (6) qui l'enferme ; en ce que pendant tout le temps où l'élément de fermeture formant clapet (5 ou 4) est en position d'ouverture, l'accouplement des éléments de fermeture (4, 5) est maintenu ; en ce que qu'après le mouvement de fermeture de l'élément de fermeture formant clapet (5 ou 4), l'élément de fermeture formant tiroir (4 ou 5) est séparé de l'autre élément de fermeture (5 ou 4) qui se trouve dans sa position de fermeture, et amené dans sa position de repos ; et en ce que, pour effectuer le nettoyage des sièges, l'élément de fermeture formant tiroir (4 ou 5) est seul déplacé, à partir de sa position de repos, en direction de la partie (1 ou 2) du boîtier de vanne qui amène éventuellement le produit.

2. Procédé selon la revendication 1, dans lequel, l'élément de fermeture formant clapet (5 ou 4) étant en position de fermeture, l'élément de fermeture formant tiroir (4 ou 5) est déplacé seul dans la direction de la partie du corps de vanne (1 ou 2) amenant éventuellement le produit, caractérisé en ce que des agents de nettoyage (R1) sont apportés de l'extérieur de la vanne à double siège par l'intermédiaire de la chambre de fuites (3) jusqu'à la surface de siège qui a été exposée.

3. Procédé selon la revendication 1 ou 2, caractérisé en ce que l'agent de nettoyage (R1) préparé de l'extérieur de la soupape à double siège, met initialement en marche, en franchissant une pression réglable au choix, la suite d'opérations qui est nécessaire pour le nettoyage du siège de l'élément de fermeture (4 ou 5) formant tiroir, laquelle se termine selon un algorithme de commutation, interne à la vanne.

4. Procédé selon l'une des revendications 1 à 3, caractérisé en ce que la suite d'opérations nécessaire pour l'ouverture et la fermeture de la vanne à double siège se termine selon un algorithme de commutation, interne à la vanne, qui est déclenché de l'extérieur de la vanne à double siège.

5. Procédé selon l'une des revendications 1 à 4, caractérisé en ce que l'opération de nettoyage est exécutée par plusieurs mouvements répétés de course partielle des éléments de fermeture (4 ou 5).

6. Procédé selon l'une des revendications 1 à 5, caractérisé en ce que l'élément de fermeture (5 ou 4) formant clapet est appuyé à volonté avec une force supplémentaire sur sa surface de siège (6a).

7. Procédé selon l'une des revendications 1 à 6, caractérisé en ce que l'un au moins des éléments de fermeture (4, 5) est conformé, dans la région de la partie du corps de vanne (1 ou 2) qui lui correspond, de telle façon que les forces de pression exercées par le fluide dans les canalisations (1, 2) sur les éléments de fermeture (4, 5) sont largement compensées.

8. Dispositif pour la mise en œuvre du procédé selon l'une des revendications 1 à 6, dans lequel les tiges de vanne (4a, 5a) des deux éléments de fermeture (4, 5) sont orientées dans une direction et s'emboîtent l'une dans l'autre de façon télescopique et dans lequel une tige de vanne (5a) est reliée à un dispositif d'actionnement, caractérisé en ce que l'autre tige de vanne (4a) est guidée et introduite dans le dispositif d'actionnement (11) et les deux tiges de vanne (4a, 5a) sont équipées dans ce dernier, chacune d'un piston d'entraînement (4b ou 5b), les pistons d'entraînement (4b, 5b) étant sollicités par ressort au moins d'un côté et formant, à l'intérieur du dispositif d'actionnement (11) et avec ce dernier, trois chambres (10a, 10b, 10c) séparées les unes des autres, qui peuvent être pilotées au choix et indépendamment, l'une (10b) d'entre elles étant formée entre les pistons d'entraînement (4b, 5b) et une deuxième chambre (10c) logeant le ressort principal (8), et en ce qu'une tige de vanne (4a ou 5a) peut être bloquée au moyen d'un dispositif de blocage (9) contre des parties constitutives fixes de la vanne à double siège.

9. Dispositif pour la mise en œuvre du procédé selon la revendication 7, dans lequel les tiges de vanne (4a, 5a) des deux éléments de fermeture (4, 5) sont orientées dans une direction et s'emboîtent l'une dans l'autre de façon télescopique, et dans lequel une tige de vanne (5a) est reliée à un dispositif d'actionnement (11), ledit dispositif étant caractérisé en ce que l'autre tige de vanne (4a) est guidée pour entrer dans le dispositif d'actionnement (11), et les deux tiges de vanne (4a, 5a) sont chacune équipées dans ce dernier d'un piston d'entraînement (4b ou 5b), les pistons d'entraînement (4b ou 5b) appliqués par ressort, au moins d'un côté, formant à l'intérieur du dispositif d'actionnement (11) et avec ce dernier, trois chambres (10a, 10b, 10c) séparées les unes des autres, qui peuvent être pilotées au choix et indépendamment, l'une (10b) d'entre elles étant formée entre les pistons d'entraînement (4b, 5b) et une deuxième chambre (10c) logeant le ressort principal (8), et en ce que l'élément de fermeture formant tiroir (4 ou 5) comporte un piston de compensation (13) guidé avec étanchéité dans la partie (1, 2) de la boîte de vanne, et qui présente le même diamètre que l'alésage cylindrique (6).

10. Dispositif selon la revendication 8 ou 9, caractérisé en ce que le piston d'entraînement (4b, 5b) de l'élément de fermeture (4 ou 5), qui, lors du mouvement d'ouverture de la vanne à double siège, est amené à partir de l'autre élément de fermeture (5, 4) jusqu'à la position d'ouverture, peut coulisser de manière étanche sur sa tige de vanne (4a ou 5a) lors de ce mouvement d'ouverture, tandis qu'il attaque cette tige par un collet (4d ou 5d) dans la direction de déplacement opposée.

11. Dispositif selon l'une des revendications 8 à 10, caractérisé en ce que la chambre (10b) située entre les pistons d'entraînement (4b, 5b) est reliée à l'environnement de la vanne à double siège par l'intervalle annulaire autour de la tige de vanne (5a) ou par une canalisation (5d) à l'intérieur de celle-ci.

12

| | a | c | b | d |
|---|---|---|---|---|
| 1 | 0 | 1 | 0 | (0) |
| 2 | 0 | 1 | 1 | (1) |
| 3 | 1-0 | 0 | 1 | (1) |
| 4.1 | 1 | 1 | 0 | (0) |
| 4.2 | 1 | 0 | 0 | 0 |

Fig 1.1a

Fig. 1.1

Fig.1.2

2

Fig. 1.3

Fig. 1.4.1

Fig. 1.4.2

| | a | c | b | d |
|---|---|---|---|---|
| 1 | 0 | 1 | 0 | 0 |
| 2 | 0 | 1 | 1 | 1 |
| 3 | 1 | 0 | 1 | 1 |
| 4.1 | 1 | 1 | 0 | 0 |
| 4.2 | 1 | 0 | 0 | 0 |

Fig. 2a

Fig. 2

zu Fig.1                    zu Fig.2

| | a | c | b | d | a | c | b | d |
|---|---|---|---|---|---|---|---|---|
| 1. | 0 | 1 | 0 | (0) | 0 | 1 | 0 | 0 |
| 2. | 0 | 1 | 1 | (1) | 0 | 1 | 1 | 1 |
| 3. | 1-0 | 0 | 1 | (1) | 1-0 | 0 | 1 | 1 |
| 4. | | | | | | | | |
| 4.1 | 1 | 1 | 0 | (0) | 1 | 1 | 0 | 0 |
| 4.2 | 1 | 0 | 0 | 0 | 1 | 0 | 0 | 0 |

FIGUR